(19) Europäisches Patentamt
European Patent Office
Office européen des brevets

(11) Veröffentlichungsnummer: **0 254 152 B1**

(12) # EUROPÄISCHE PATENTSCHRIFT

(45) Veröffentlichungstag der Patentschrift: **04.04.90**

(51) Int. Cl.⁴: **C08G 18/79**, C09D 175/04, C09D 5/46

(21) Anmeldenummer: **87109965.1**

(22) Anmeldetag: **10.07.87**

(54) **Pulverlack und seine Verwendung zur Beschichtung von Hitzeresistenten Substraten.**

(30) Priorität: **22.07.86 DE 3624775**

(43) Veröffentlichungstag der Anmeldung: **27.01.88 Patentblatt 88/4**

(45) Bekanntmachung des Hinweises auf die Patenterteilung: **04.04.90 Patentblatt 90/14**

(84) Benannte Vertragsstaaten: **AT BE CH DE ES FR GB IT LI NL SE**

(56) Entgegenhaltungen:
**EP-A- 0 153 561**
**EP-A- 0 182 996**

(73) Patentinhaber: **BAYER AG, D-5090 Leverkusen 1 Bayerwerk(DE)**

(72) Erfinder: **Halpaap, Reinhard, Dr., Kleinfeldchensweg 37b, D-5000 Köln 91(DE)**
Erfinder: **Pedain, Josef, Dr., Haferkamp 6, D-5000 Köln 80(DE)**
Erfinder: **Kreuder, Hans-Joachim, Dr., Doerperhofstrasse 35, D-4150 Krefeld(DE)**
Erfinder: **Klein, Gerhard, Dr., Von-Flotow-Strasse 7, D-4019 Monheim(DE)**
Erfinder: **Schäfer, Walter, Dr., In den Weiden 25, D-5653 Leichlingen(DE)**
Erfinder: **Arlt, Dieter, Prof. Dr., Rybnikerstrasse 2, D-5000 Köln 80(DE)**

EP 0 254 152 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die voliegende Erfindung betrifft einen neuen Pulverlack auf Basis von Kombinationen von organischen Polyhydroxylverbindungen mit organischen Polyisocyanaten als Vernetzer und die Verwendung dieses Pulverlacks bei der Herstellung von Beschichtungen auf beliebigen Hitzeresistenten Substraten.

Pulverlacke auf Polyurethanbasis sind bekannt (z.B. DE-AS 1 957 483, DE-OS 2 047 718, DE-OS 2 064 098, DE-PS 2 127 839, DE-OS' 2 246 620, DE-AS 2 351 477, DE-OS 2 429 517). Als Härterkomponenten kommen dabei blockierte Polyisocyanate zum Einsatz. Für lichtechte Lacksysteme werden vielmals solche Härter beschrieben, die ausgehend von Isophorondiisocyanat (IPDI) hergestellt werden und in der Regel mit ε-Caprolactam blockiert sind (z.B. DE-OS en 2 105 777, 2 542 191, 2 735 497, 2 842 641, 2 929 224, 3 004 876, 3 039 824).

Aus diesen mit ε-Caprolactam blockierten IPDI-Derivaten werden beim Einbrennen mit geeigneten Polyhydroxylverbindungen Lacke erhalten, die sich bei leichter Handhabbarkeit durch guten Verlauf, hohe Härte und Elastizität sowie gute Ghemikalienbeständigkeit auszeichnen. Ein Nachteil dieser Polyurethan-Pulverlacke ist jedoch die hohe Einbrenntemperatur von ca. 200°C. Ein weiterer Nachteil ist in der Abspaltung des Blockierungsmittels zu sehen, welche bei der Verarbeitung der Pulverlacke besondere Vorkehrungen zwecks Reinigung der Abluft und Wiedergewinnung des Blockierungsmittels unerläßlich macht. Die Abspaltung des Blockierungsmittels ist im übrigen für die Einführung neuer Techniken wie z.B. der Verwendung von direkt gasbeheizten Einbrennöfen oder die Anwendung der Infrarot-Härtung prohibitiv.

Es hat nicht an Versuchen gefehlt, die hohen Einbrenntemperaturen durch Auswahl anderer Blockierungsmittel zu senken. So wurden z.B. Triazole (DE-OS 2 812 252), cyclische Amidine (DE-OS 2 946 085) oder sekundäre Amine (DE-OS 3 434 881) als Blockrierungsmittel mit niedrigeren Abspalttemperaturen für Polyurethan-Pulverlackhärter vorgeschlagen.

Der prinzipielle Nachteil des Gehalts an Blockierungsmitteln im Pulverlack ist damit jedoch nicht behoben. Die oben beschriebenen Schwierigkeiten, die durch das abgespaltene Blockierungsmittel entstehen können und die verhindern, daß man trotz Lösemittelfreiheit ein zu 100 % als Lackfilm einbrennbares Harz zur Verfügung hat, bleiben bestehen.

Ein Versuch, diesen prinzipiellen Nachteil zu beseitigen, ist in der Verwendung von Blockierungsmittelfreien, linearen Uretdion- und Urethangruppen-haltigen IPDI-Derivaten zu sehen, die endständig Urethan-, Harnstoff- oder freie NCO-Gruppen aufweisen (EP-A-O 045 994, EP-A-O 045 996 oder EP-A-O 045 998). Die Vernetzung der Polyhydroxylverbindungen erfolgt bei Verwendung dieser Vernetzer über die Aufspaltung der Uretdionringe. Nachteilig ist hierbei die strikte Linearität der Vernetzer, die für das Syntheseverfahren erforderlich ist, und die eine Verzweigung des Lacks zur Einstellung einer guten Lösungsmittelfestigkeit, Kratzfestigkeit und hohen Härte durch Variation des Härters nicht erlaubt.

Es war daher die der Erfindung zugrundeliegende Aufgabe, einen neuen Pulverlack zur Verfügung zu stellen, der nicht mit den genannten Nachteilen des Standes der Technik behaftet ist, d.h. der insbesondere ohne Abspaltung von Blockierungsmitteln bei niedrigen Temperaturen zu hochvernetzten Lacken einbrennbar ist.

Diese Aufgabe konnte durch die Bereitstellung des nachstehend näher beschriebenen Pulverlacks gelöst werden.

Die Härter-Komponente dieses Pulverlacks besteht aus einem ganz bestimmten, Blockierungsmittel-freien Polyisocyanat bzw. Polyisocyanat-Gemisch. Der Gedanke, als Härter Blockierungsmittelfreie Polyisocyanate mit einer hohen Konzentration an freien Isocyanatgruppen einzusetzen lag keineswegs auf der Hand, da mit einer vorzeitigen Vernetzung eines derartigen, freie Hydroxylgruppen und freie Isocyanatgruppen aufweisenden, Pulverlacks und damit mit einer mangelhaften Lagerbeständigkeit des gebrauchsfertigen Lacks gerechnet werden mußte.

In der EP-A-O 071 812 wurde zwar schon vorgeschlagen, unblockierte Polyisocyanate als Pulverlackvernetzer einzusetzen, jedoch erfolgt gemäß der Lehre dieser Veröffentlichung die Vernetzung über eine NCO/Epoxid-Reak-tion, wobei die Gegenwart freier Hydroxylgruppen zwingend ausgeschlossen werden muß, da sonst schon beim Mischen und Extrudieren der Komponenten Vernetzung und Gelierung eintreten würde.

Auch Urethangruppen aufweisende Isocyanate, wie sie erfindungsgemäß als Komponente A) eingesetzt werden können sind bereits bekannt (EP-A-O 182 996), jedoch, wird in dieser Veröffentlichung hervorgehoben, das Kombinationen dieser Urethanmodifizierten Polyisocyanate mit Polyhydroxylverbindungen Zweikomponenten-Systeme darstellen, d. h. um Systeme, die nur eine beschränkte Topfzeit aufweisen.

Die Isocyanuratgruppen aufweisenden Polyisocyanate der eigenen älteren deutschen Patentanmeldung P 3 507 719.0 können zwar u.a. auch als Blockierungsmittel-freie Vernetzer für Pulverlacke eingesetzt werden, jedoch gehört die Lehre dieser Patentanmeldung nicht zum vorveröffentlichten Stand der Technik.

Gegenstand der vorliegenden Erfindung ist ein Pulverlack bestehend im wesentlichen aus einem Gemisch aus

A) einer pulverförmigen, unterhalb 40°C festen und oberhalb 150°C flüssigen Polyisocyanatkomponente,

B) einer pulverförmigen, unterhalb 40°C festen und oberhalb 150°C flüssigen organischen Polyhydroxylkomponente

und gegebenenfalls

C) aus der Pulverlack-Technologie bekannten Hilfs- und Zusatzmitteln,

wobei die Komponenten A) und B) in, einem Äquivalentverhältnis von Isocyanatgruppen zu Hydroxylgruppen von 0,6:1 bis 1,2:1 entsprechenden, Mengen vorliegen, das dadurch gekennzeichnet ist, daß die Komponente A) im wesentlichen ein Polyisocyanat oder Polyisocyanat-Gemisch darstellt,

a) welches keine Blockierungsmittel für Isocyanatgruppen aufweist,
b) welches einen Gehalt an freien, an tertiäre, aliphatische oder cycloaliphatische Kohlenstoffatome gebundenen Isocyanatgruppen (berechnet als NCO) von 8 bis 24 Gew.-% bei einer (mittleren) NCO-Funktionalität von mindestens 2,1 aufweist,
c) welches einen Gehalt an Urethangruppen (berechnet als -NH-CO-O-) von 3 bis 30 Gew.-% aufweist
und
d) welches einen Gehalt an Isocyanuratgruppen (berechnet also $C_3N_3O_3$) von 0 bis 30 Gew.-% aufweist.

Gegenstand der Erfindung ist auch die Verwendung dieses Pulverlacks zu Herstellung von Beschichtungen beliebiger Hitze-resistenter Substrate nach den Methoden der Pulverlack-Technologie.

Zur Herstellung der erfindungswesentlichen Vernetzer A) werden bestimmte Ausgangsdiisocyanate Aa) mit bestimmten Polyhydroxylverbindungen Ab) unter Einhaltung eines NCO/OH-Äquivalentverhältnisses von 1,6:1 bis 40:1, vorzugsweise 1,8:1 bis 20:1 umgesetzt, wobei gegebenenfalls nach erfolgter Umsetzung eine weitere Modifizierung der Umsetzungsprodukte erfolgt.

Bei der Komponente Aa) handelt es sich entweder um (i) aliphatisch-cycloaliphatische Diisocyanate mit einem NCO-Gehalt von 20 bis 50, vorzugsweise 30 bis 48 Gew.-%, die neben einer sterisch ungehinderten, aliphatisch gebundenen Isocyanatgruppe eine sterisch gehinderte, cycloaliphatisch gebundene Isocyanatgruppe aufweisen, und/oder um (ii) zwei Isocyanatoalkyl-Substituenten aufweisende aromatische oder cycloaliphatische Verbindungen mit einem NCO-Gehalt von 20 bis 35, vorzugsweise 25 bis 35 Gew.-%, bei denen beide Isocyanatgruppen an tertiäre aliphatische Kohlenstoffatome gebunden sind.

Gut geeignete Ausgangsdiisocyanate (i) sind solche der Formel (I),

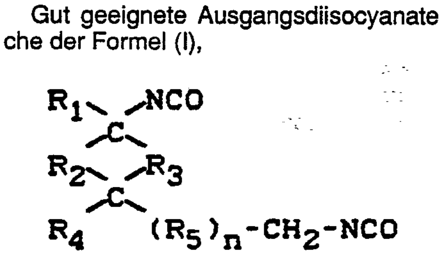

(I)

für welche
$R_1$ für einen Alkylrest mit 1 bis 4 Kohlenstoffatomen, vorzugsweise einen Methylrest steht,
$R_2$ und $R_3$ für gleiche oder verschiedene Reste stehen und jeweils einen zweiwertigen linearen oder verzweigten gesättigten Kohlenwasserstoffrest mit 1 bis 4, vorzugsweise 1 bis 3 Kohlenstoffatomen bedeuten, wobei die Summe der Kohlenstoffatome dieser Reste vorzugsweise 3 bis 6, insbesondere 4 oder 5 beträgt,
$R_4$ für Wasserstoff oder einen Alkylrest mit 1 bis 4 Kohlenstoffatomen, vorzugsweise für Wasserstoff oder einen Methylrest steht,
$R_5$ für einen zweiwertigen, linearen oder verzweigten, gesättigten aliphatischen Kohlenwasserstoffrest mit 1 bis 4, insbesondere 1 bis 3 Kohlenstoffatomen steht und
n für 0 oder 1 steht.

Besonders bevorzugte Diisocyanate (i) sind z.B. 1-Isocyanato-1-methyl-4(3)-isocyanatomethylcyclohexan, welches im allgemeinen als Gemisch der 4- und 3-Isocyanatomethyl-Isomeren vorliegt, 1-Isocyanato-1-methyl-4-(4-isocyanatobut-2-yl)-cyclohexan, 1-Isocyanato-1,2,2-trimethyl-3-(2-isocyanatoethyl)-cyclopentan oder 1-Isocyanato-1,4(3)-dimethyl-4(3)-isocyanatomethylcyclohexan, welches im allgemeinen in Form eines 4-Methyl-4-isocyanatomethyl- und 3-Methyl-3-isocyanatomethyl-Isomerengemischs vorliegt. Geeignet sind jedoch auch z.B. 1-Isocyanato-1-n-butyl-3-(4-isocyanatobut-1-yl)-cyclopentan, 1-Isocyanato-1-ethyl-4-n-butyl-4-(4-isocyanatobut-1-yl)-cyclohexan ode 1-Isocyanato-1,2-dimethyl-3-ethyl-3-isocyanatomethyl-cyclopentan.

Derartige Isocyanate (i) sind bekannt, ihre Herstellung wird in der DE-OS 3 402 623 (= EP-A-0 153 561) beschrieben.

Geeignete Ausgangsdiisocyanate (ii) sind beispielsweise solche der Formel (II)

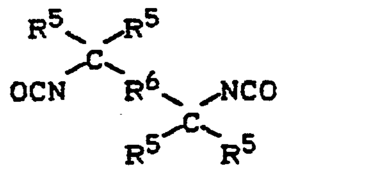

(II)

für welche
$R^5$ für einen Alkylrest mit 1 bis 4 Kohlenstoffatomen, vorzugsweise einen Methylrest, steht,
$R^6$ für einen zweiwertigen aromatischen Kohlenwasserstoffrest steht, ausgewählt aus der Reihe der Phenylen-, Biphenylen- oder Naphthylen-Reste, die gegebenenfalls Halogen-, Methyl- oder Methoxysubstituiert sein können.

Besonders bevorzugte Diisocyanate (ii) sind 1,3- oder 1,4-Bis(2-isocyanatoprop-2-yl)benzol.

Die Diisocyanate der Formel (II) sind ebenfalls bekannt. Ihre Herstellung wird beispielsweise in EP-A-0 101 832 beschrieben.

Bei den Polyhydroxylverbindungen Ab) handelt es sich um 2- und/oder 3- und/oder 4-wertige Hydroxylverbindungen mit aliphatisch gebundenen Hydroxylgruppen des Molekulargewichtsbereichs 62 bis 400 wie z.B. Ethylenglykol, Diethylenglykol, Triethylenglykol, Propylenglykol, Dipropylenglykol, Tripropylenglykol, Tetrapropylenglykol, 1,4-Butandiol, 1,6-Hexandiol, 4,4'-Dihydroxydicyclohexylmethan, 2,2-Bis(4-hydroxycyclohexyl)-propan, 1,4-Bis(2-hydroxyethoxy)benzol, Bishydroxymethylcyclohexan, 2,2-Dimethyl-1,3-propandiol, Trimethylolpropan, Trishydroxyethylisocyanurat oder Pentaerythrit oder um Gemische derartiger Polyhydroxylverbindungen.

Beim Verfahren zur Herstellung der erfindungswesentlichen Polyisocyanate werden die Ausgangsdiisocyanate Aa) mit den Polyolen Ab) in dem genannten Äquivalentverhältnis von NCO/OH = 1,6:1 bis 40:1, vorzugsweise von 1,8:1 bis 20:1 bis zum theoretisch berechneten NCO-Gehalt umgesetzt, wobei durch Auswahl der Polyhydroxylkomponente Ab) dafür Sorge getragen wird, daß die resultierenden, Urethangruppen aufweisenden Polyisocyanate eine (mittlere) NCO-Funktionalität von mindestens 2,1, vorzugsweise von 2,1 bis 3,5 und insbesondere von 2,2 bis 2,6 aufweisen, es sei denn, im Anschluß an die genannte Umsetzung erfolgt, wie weiter unten beschrieben, eine Trimerisierungsreaktion, die zu einer Erhöhung der NCO-Funktionalität führt. In einem solchen Falle können als Polyhydroxylverbindungen Ab) auch ausschließlich zweiwertige Alkohole eingesetzt werden, während im erstgenannten Falle Gemische aus zwei- und höherwertigen Alkoholen bzw. ausschließlich höher als zweiwertige Alkohole verwendet werden.

Die zur Urethanbildung erforderliche Reaktionstemperatur liegt bei dem beschriebenen Verfahren bei 20 bis 200°C, bevorzugt bei 40 bis 160°C, besonders bevorzugt bei 40 bis 120°C. Die Umsetzung wird bevorzugt ohne Lösungsmittel durchgeführt.

Bei der Verwendung der Diisocyanate (ii) mit zwei sterisch gehinderten Isocyanatgruppen schließt sich in der Regel eine Dünnschichtdestillation an, um durch Abde stillieren des überschüssigen monomeren Diisocyanats monomerenarme erfindungsgemäß geeignete Polyisocyanate mit Monomerengehalten <1,0 Gew.-% zu erhalten.

Beim Einsatz der Diisocyanate (i) mit einer sterisch gehinderten und einer sterisch ungehinderten Isocyanatgruppe als Ausgangsdiisocyanate für die erfindungsgemäß verwendbaren Polyisocyanate kann auf eine Dünnschichtdestillation verzichtet werden. Bei Einhaltung eines Äquivalentverhältnisses von NCO/OH = 1,6:1 bis 2:1, bevorzugt 1,8:1 bis 2:1, werden aufgrund der um Größenordnungen unterschiedlichen Reaktivität beider Isocyanatgruppen des Ausgangsdiisocyanats ohne eine weitere Operation direkt monomerenarme Polyisocyanate mit einem Monomerengehalt <2 %, im allgemeinen <1,0 %, erhalten.

Wird mit den Diisocyanaten (i) bei der Umsetzung mit Polyolen bei einem Äquivalentverhältnis von NCO/OH = 2:1 bis 40:1, bevorzugt 2:1 bis 20:1, gearbeitet, so kann auch in diesen Fällen eine Dünnschichtdestillation unterbleiben, wenn die nach der Urethanbildung verbliebenen sterisch ungehinderten an ein primäres Kohlenstoffatom gebundenen Isocyanatgruppen durch Cyclotrimerisierung in Isocyanuratgruppen überführt werden. Die Urethangruppen und Isocyanuratgruppen enthaltenden Polyisocyanate werden monomerenarm erhalten, mit <2 Gew.- %, bevorzugt (1,0 Gew.-% monomerem Diisocyanat. In diesen Fällen können auch in einer bevorzugten Ausführungsform zur Beeinflussung der Eigenschaften der erfindungsge mäß verwendbaren Polyisocyanate nach der Urethanbildung und vor der Cyclotrimerisierung andere diprimäre Diisocyanate, vorzugsweise Hexamethylendiisocyanat, in unterschüssiger Menge, bis zu 40 Mol-%, bezogen auf eingesetztes aliphatisch-cycloaliphatisches Diisocyanat (i) zugegeben werden, wobei die Trimerisierung soweit durchgeführt wird, bis alle an primäre Kohlenstoffatome gebundene Isocyanatgruppen verbraucht sind.

Für das beschriebene Verfahren geeignete Trimerisierungskatalysatoren sind alle beliebigen bislang für diesen Zweck eingesetzten Verbindungen wie beispielsweise Phosphine der in DE-OS 1 934 763 beschriebenen Art, Alkaliphenolate der in GB-PS 1 391 066 oder GB-PS 1 386 399 beschriebenen Art, Aziridinderivate in Kombination mit tertiären Aminen der in DE-OS 2 325 826 beschriebenen Art, Mannichbasen, beispielsweise auf Basis von i-Nonylphenol, Formaldehyd und Dimethylamin der in US-PS 4 115 373 beschriebenen Art, quaternäre Ammoniumcarboxylate der in EP-OS 17 998 beschriebenen Art, quaternäre Ammoniumphenolate mit zwitterionischer Struktur der beispielsweise in US-PS 4 335 219 beschriebenen Art, Ammoniumphosphonate und -phosphate der in DE-OS 3 227 489 beschriebenen Art, Alkalicarboxylate der in DE-OS 3 219 608 beschriebenen Art oder basische Alkalimetallsalze in Verbindung mit Phasentransfer-Katalysatoren, wie sie von R. Richter, P. Müller und K. Wagner, "Die Angewandte Makromolekulare Chemie" <u>113</u>, 1-9 (1983) näher beschrieben werden, hier besonders bevorzugt Kaliumacetat komplexiert mit einem Polyethylenglykol, welches im Mittel 5 bis 8 Ethylenoxideinheiten enthält.

Besonders gut geeignet sind als Kalalysatoren außerdem quaternäre Ammoniumhydroxide der allgemeinen Formel

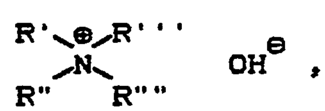

wie sie in den DE-OSen 2 806 731 und 2 901 479 beschrieben sind. Bevorzugt werden dabei quaternäre Ammoniumhydroxide der angegebenen Struktur, wobei die Reste R′ bis R″″ für gleiche oder verschiedene Alkylgruppen mit 1 bis 20, vorzugsweise 1 bis 4, Kohlenstoffatomen stehen, die gegebenenfalls mit Hydroxylgruppen substituiert sind, und wobei zwei der genannten Reste R′ bis R″″ auch zusammen mit dem Stickstoffatom und gegebenenfalls mit einem weiteren Stickstoff- oder Sauerstoffatom einen heterocyclischen Ring mit 3 bis 5 Kohlenstoffatomen bilden können, oder wobei die Reste R′ bis R‴ jeweils für Ethylenreste stehen, die zusammen mit dem quaternären Stickstoffatom und einem weiteren tertiären Stickstoffatom ein bicyclisches Triethylendiamin-Gerüst bilden, mit der Maßgabe, daß dann der Rest R″″ eine Hydroxylalkylgruppe mit 2 bis 4 Kohlenstoffatomen darstellt, wobei die Hydroxylgruppe vorzugsweise in 2-Stellung zum quaternären Stickstoffatom angeordnet ist, wobei in den genannten Fällen der hydroxylsubsti tuierte Rest oder die hydroxylsubstituierten Reste außer dem Hydroxyl-Substituenten auch beliebige andere Substituenten, insbesondere $C_1$- bis $C_4$-Alkoxy-Substituenten, aufweisen können. Die Darstellung

der zuletzt beschriebenen Katalysatoren erfolgt in an sich bekannter Weise durch Umsetzung von tertiärem Amin mit Alkylenoxid in wäßrig-alkoholischem Medium (vgl. US-PS 3 995 997, Kol. 2, Zeilen 19-41). Als tertiäre Amine sind dafür beispielsweise genannt: Trimethylamin, Tributylamin, 2-Dimethylaminoethanol, Triethanolamin, Dodecyldimethylamin, N,N-Dimethylcyclohexylamin, N-Methylpyrrolidin, N-Methylmorpholin oder 1,4-Diazabicyclo-[2,2,2]-octan; als Alkylenoxide können beispielsweise Ethylenoxid, Propylenoxid, 1,2-Butylenoxid, Styroloxid oder Methoxy-, Ethoxy- oder Phenoxypropylenoxid verwendet werden. Ganz besonders bevorzugte Katalysatoren aus dieser Gruppe sind N,N,N-Trimethyl-N-(2-hydroxyethyl)-ammoniumhydroxid und N,N,N-Trimethyl-N-(2-hydroxypropyl)-ammoniumhydroxid.

Die Trimerisierungskatalysatoren werden im allgemeinen in Mengen von 0,005 bis 5 Gew.-%, vorzugsweise 0,01 bis 2 Gew.-%, bezogen auf bei der Trimerisierungsreaktion eingesetztes Ausgangsgemisch, eingesetzt. Wird z.B. ein bevorzugter Katalysator wie N,N,N-Trimethyl-N-(2-hydroxypropyl)-ammoniumhydroxid verwendet, so sind Mengen von 0,05 bis 1 Gew.-%, bevorzugt von 0,07 bis 0,7 Gew.-%, bezogen auf Ausgangsgemisch, im allgemeinen ausreichend. Die Katalysatoren können in reiner Form oder als Lösung eingesetzt werden. Als Lösungsmittel eignen sich je nach Art des Katalysators z.B. die bereits genannten gegenüber Isocyanatgruppen inerten Lösungsmittel, ebenso auch Dimethylformamid oder Dimethylsulfoxid. Bei der Mitverwendung von Carbamidsäurederivate-bildenden Hydroxyverbindungen als Cokatalysatoren ist es von Vorteil diese gleichzeitig als Katalysatorlösungsmittel zu verwenden. Dafür eignen sich z.B. Methanol, Ethanol, Isopropanol, 2-Ethylhexanol oder Glykole wie 1,2-Dihydroxyethan, 1,2-Dihydroxypropan, 1,3- und 1,4-Dihydroxybutan, 1,6- und 2,5-Dihydroxyhexan, 2-Ethyl-1,3-dihydroxyhexan oder 2,2,4-Trimethyl-1,3-dihydroxypentan.

Die zur Trimerisierung erforderliche Reaktionstemperatur liegt bei 20 bis 200°C, bevorzugt bei 40 bis 160°C. Die Trimerisierungsreaktion wird bevorzugt in Abwesenheit von Lösungsmitteln durchgeführt.

Bei der Herstellung der erfindungswesentlichen Polyisocyanatkomponente A) werden im übrigen Art und Mengenverhältnisse der Ausgangsmaterialien, sowie gegebenenfalls der Trimerisierungsgrad so gewählt, daß ein modifiziertes Polyisocyanat bzw. ein modifiziertes Polyisocyanat-Gemisch erhalten wird, welches den obengenannten Angaben a) bis d) entspricht, wobei der Gehalt der modifizierten Polyisocyanate an tertiär gebundenen Isocyanatgruppen vorzugsweise bei 12 bis 20 Gew.-%, der Gehalt an primär und/oder sekundär gebundenen Isocyanatgruppen vorzugsweise unterhalb 0,5 Gew.-%, die mittlere NCO-Funktionalität vorzugsweise bei 2,2 bis 3,8 insbesondere bei 2,3 bis 3,5, der Gehalt an Urethangruppen vorzugsweise bei 4 bis 22 Gew.-%, der Gehalt an Isocyanuratgruppen vorzugsweise bei 0 bis 20 Gew.-% und der Gehalt an monomeren Ausgangsdiisocyanaten unter 2, vorzugsweise unter 1 Gew.-% liegen, wobei die modifizierten Polyisocyanate unterhalb 40°C fest und oberhalb 150°C flüssig sind, insbesondere einen nach der Differential-Thermoanalyse (DTA) bestimmten Schmelzpunkt bzw. Schmelzbereich aufweisen, der innerhalb des Temperaturbereichs von 40 bis 130°C, besonders bevorzugt innerhalb des Temperaturbereichs von 50 bis 110°C liegt. Die erfindungswesentlichen Polyisocyanate bzw. Polyisocyanat-Gemische A) genügen im allgemeinen diesen Kriterien, wenn bei ihrer Herstellung bezüglich Auswahl der Ausgangsmaterialien, Wahl der Mengenverhältnisse der Ausgangsmaterialien und Durchführung der Modifizierungsreaktion bzw. der Modifizierungsreaktionen die oben gemachten Angaben beachtet werden, wobei der Schmelzpunkt bzw. der Schmelzbereich beispielsweise durch Verwendung verzweigter Polyole Ab) erhöht, dementsprechend durch Mitverwendung von linearen Polyolen Ab) erniedrigt oder die NCO-Funktionalität durch Mitverwendung von höherfunktionellen Polyolen Ab) erhöht werden können. Durch Mitverwendung unterschiedlicher Mengen an diprimären Diisocyanaten, insbesondere an Hexamethylendiisocyanat, bei der Trimerisierungsreaktion (die nach Verbrauch aller primär gebundener Isocyanatgruppen automatisch zum Stillstand kommt) kann ebenfalls die Funktionalität in gewünschter Weise eingestellt werden. Ferner ist der Gehalt der modifizierten Polyisocyanate an Isocyanuratgruppen von unmittelbaren Einfluß auf den Schmelzbereich der modifizierten Polyisocyanate, so daß durch den Trimerisierungsgrad, d.h. durch die Menge der vor der Trimerisierungsreaktion vorliegenden, primär gebundenen Isocyanatgruppen nicht nur die Funktionalität, sondern auch der optimale Schmelzbereich eingestellt werden kann.

Bei der Polyhydroxylkomponente B) des erfindungsgemäßen Pulverlacks handelt es sich um die aus der Pulverlack-Technologie üblichen, hydroxylgruppenhaltigen Harze, die unterhalb 40°C fest und oberhalb 150°C flüssig sind. Die hydroxylgruppenhaltigen Harze weisen vorzugsweise Erweichungstemperaturen - bestimmt nach der Differential-Thermoanalyse (DTA) - zwischen 40 und 140°C, vorzugsweise zwischen 45 und 100°C auf. Ihre Hydroxylzahlen liegen im allgemeinen zwischen 25 und 200, vorzugsweise zwischen 30 und 130 und ihr mittleres (aus der Funktionalität und dem Hydroxylgehalt errechenbares) Molekulargewicht im allgemeinen zwischen 400 und 10.000, vorzugsweise zwischen 1.000 und 5.000.

Derartige hydroxylgruppenhaltige Harze sind beispielsweise:

1. Hydroxylgruppenhaltige Polyester, die in üblicher Weise aus aromatischen oder aliphatischen oder cycloaliphatischen Glykolen bzw. Polyolen, vorzugsweise aufgrund der besseren Kreidungs- und Wetterbeständigkeit aus aliphatischen oder cycloaliphatischen Glykolen, und Polycarbonsäuren bzw. deren funktionellen Derivaten (Estern, Säurechloriden usw.) erhalten werden (vgl. Houben-Weyl, XIV/2, S. 1-46). Geeignete Glykole sind z.B. Ethylenglykol, 1,2-Propandiol, 1,4-Butandiol sowie Isomere, Neopentylglykol, 1,6-Hexandiol

und Isomere, 4,4'-Dihydroxydicyclohexylpropan-2,2 und Cyclohexandiol. Geeignete Polyole sind z.B. Trimethylolpropan, Hexantriol und Pentaerythrit. Geeignete Polycarbonsäuren sind z.B. Tetrahydrophthalsäure, Terephthalsäure, Phthalsäure, Isophthalsäure und Trimellithsäure. Besonders bevorzugt sind hydroxylgruppenhaltige Polyester die aus etwa 50 bis 65 Gew.-% aromatischen Polycarbonsäuren, 30 bis 45 Gew.-% aliphatischen Glykolen und etwa 5 Gew.-% aliphatischen Triolen aufgebaut sind.

2. Hydroxylgruppenhaltige Copolymerisate, wie sie durch Copolymerisation von z.B. Hydroxyalkylacrylaten bzw. -methacrylaten mit Acryl- bzw. Methacrylsäurealkylestern, sowie gegebenenfalls weiteren olefinisch ungesättigten Monomeren und/oder wie sie gemäß der DE-OS 2 137 239 aus Styrol-Maleinsäure-Copolymerisaten durch teilweise Veresterung der Säuregruppen mit Ethylenoxid erhalten werden.

3. Beliebige Gemische der unter 1. und 2. beispielhaft genannten Verbindungen.

Bei den gegebenenfalls mitzuverwendenden Hilfs- und Zusatzmitteln handelt es sich beispielsweise um Pigmente wie z.B. Titandioxid, Verlaufmittel wie z.B. Polybutylacrylat oder solchen auf Basis von Polysilikonen.

Zur Herstellung des gebrauchsfertigen Pulverlacks werden die Polyisocyanatkomponente A) und die Polyhydroxylkomponente B) miteinander gemischt und gegebenenfalls mit den Zusatzmitteln C) versehen und beispielsweise auf Extrudern oder Knetern bei Temperaturen oberhalb des Schmelzbereichs der Einzelkomponenten, beispielsweise bei 100 bis 160°C, zu einem homogenen Material vereinigt. Der nach Abkühlen der Schmelze resultierende Feststoff wird anschließend gemahlen und durch Sieben von den Kornanteilen oberhalb 0,1 mm befreit. Die Komponenten A) und B) kommen hierbei in solchen Mengenverhältnissen zum Einsatz, daß für jede Hydroxylgruppe der Komponente B) 0,6 bis 1,2, vorzugsweise 0,8 bis 1,0, Isocyanatgruppen der Komponente A) zur Verfügung stehen. Zur Herstellung des gebrauchsfertigen Pulverlacks aus den Ausgangsmaterialien ist nur ein sehr kurzzeitiges Erhitzen auf Temperaturen oberhalb des Schmelzbereichs der Einzelkomponenten erforderlich, so daß davon ausgegangen werden kann, daß eine nennenswerte Reaktion zwischen den Komponenten A) und B) während der Herstellung des Pulverlacks nicht stattfindet. Dies ziegt sich auch in dem Umstand, das der Schmelzbereich des gebrauchsfertigen Pulverlacks in erster Näherung den Schmelzbereichen der Einzelkomponenten, insbesondere dem Schmelzbereich der Polyhydroxylkomponente B), die im allgemeinen in den Pulverlacken in höheren Gewichtsanteilen vorliegt, entspricht. Im übrigen bedarf es nur eines kurzen Vorversuchs, um die optimale Temperatur zur Herstellung des gebrauchsfertigen Pulverlacks zu ermitteln, bei welcher einerseits eine einwandfreie Durchmischung der in der Schmelze vorliegenden Einzelkomponenten möglich und eine unerwünschte Vorreaktion weitgehend ausgeschlossen ist.

Der so hergestellte Pulverlack kann nach üblichen Pulverauftrags-Verfahren, wie z.B. elektrostatisches Pulverversprühen oder Wirbelsintern, auf die zu überziehenden Substrate aufgebracht werden. Die Härtung der Überzüge erfolgt durch Erhitzen auf Temperaturen von 150 bis 220°C, vorzugsweise 170 bis 190°C beispielsweise während eines Zeitraums von ca. 10 bis 30 Minuten. Man erhält harte, glänzende und elastische Überzüge mit hervorragenden Korrosionsschutzeigenschaften und einer sehr guten Wärmefarbstabilität.

In den nachstehenden Beispielen stellen alle Prozentangaben, mit Ausnahme der Glanzwerte, Gewichtsprozente dar.

Beispiele

Ausgangsmaterialien

Diisocyanat I: 1-Isocyanato-1-methyl-4(3)-isocyanatomethylcyclohexan (Beispiel 1 der DE-OS 3 402 623)

Diisocyanat II: 1,3-Bis(2-isocyanatopro-2-yl)benzol

Katalysator I:

10%ige Lösung von 2-Hydroxypropyl-trimethylammoniumhydroxid in 2-Ethyl-1,3-dihydroxyhexan/-1,3-Dihydroxybutan (Gewichtsverhältnis der Lösungsmittel 4:1).

Beispiel 1

(Herstellung einer erfindungsgemäß einzusetzenden Polyisocyanatkomponente A)

194 g Diisocyanat I und 20,8 g Neopentylglykol werden bei 60°C innerhalb 8 Stunden so umgesetzt, daß ein NCO-Gehalt von 31,5 % erreicht wird.

Man gibt 16,8 g 1,6-Diisocyanatohexan zu und versetzt bei 50°C mit 3 ml Katalysatorlösung I. Die exotherme Reaktionsmischung wird zunächst durch Kühlen bei 60°C gehalten, später bei dieser Temperatur geheizt. Nach 2,5 Stunden, wenn ein NCO-Gehalt von 19,5 % erreicht ist, wird bis 110°C geheizt. Man rührt dann noch 30 Minuten bei 110°C nach und gießt das Reaktionsgemisch auf ein Blech. Nach Abkühlen auf Raumtemperatur liegt ein klares Festharz mit einem NCO-Gehalt von 15,3 % und einem Schmelzbereich (bestimmt nach der Differential-Thermoanalyse) von 50 bis 55°C vor. Der Gehalt an monomerem Diisocyanat I liegt unter 1 %, der Gehalt an monomeren 1,6-Diisocyanatohexan liegt unterhalb der Nachweisgrenze, d.h. unterhalb 0,03 %. Das modifizierte Polyisocyanat weist einen Gehalt an Urethangruppen von 10,2 und einen Gehalt an Isocyanuratgruppen von 14,5 Gew.-% auf.

Beispiel 2

(Herstellung einer erfindungsgemäß einzusetzenden Polyisocyanatkomponente A)

194 g Diisocyanat I werden mit 13,4 g Trimethylolpropan bei 60°C innerhalb 8 Stunden bis zu einem NCO-Gehalt von 34,2 % umgesetzt. Man katalysiert bei 50°C mit 3 ml Katalysatorlösung I und heizt nach 2 Stunden nach Erreichen eines NCO-Gehalts von 20,5 %, noch 30 Minuten unter Rühren auf 110°C. Dann wird auf ein Blech gegossen, und man erhält ein Klares Festharz mit einem NCO-Gehalt von 16,8 % und einem Schmelzbereich (bestimmt nach der Differential-Thermoanalyse) von 55 bis 60°C. Der Gehalt an monomerem Diisocyanat I liegt unterhalb 1 %. Das modifizierte Polyisocyanat weist im übrigen einen Gehalt an Urethangruppen von 8,5 % und einen Gehalt an Isocyanuratgruppen von 14,2 % auf.

Beispiel 3

(Herstellung einer erfindungsgemäß einzusetzenden Polyisocyanatkomponente A).

194 g Diisocyanat I werden mit 13,4 g Trimethylolpropan bei 60°C innerhalb 7 Stunden bis zu einem NCO-Gehalt von 34,4 % umgesetzt. Nach Zugabe von 16,8 g 1,6-Diisocyanatohexan wird bei 50°C mit 2 ml Katalysatorlösung I versetzt. Die exotherme Reaktionsmischung wird durch Kühlen bei 60°C gehalten und erreicht nach 2 Stunden einen NCO-Gehalt von 21,3 %. Man rührt noch 30 Minuten bei 110°C nach, heizt bis 130°C auf und gießt auf ein Blech. Es wird ein klares Festharz mit einem NCO-Gehalt von 15,5 % und einem Schmelzbereich (bestimmt nach Differential-Thermoanalyse) von 60 bis 65°C erhalten. Der Gehalt an monomerem Diisocyanat I liegt unterhalb 0,5 %, der Gehalt an monomerem 1,6-Diisocyanatohexan unterhalb 0,03 %. Das modifizierte Polyisocyanat weist einen Gehalt an Urethangruppen von 7,9 % und einen Gehalt an Isocyanuratgruppen von 16,9 % auf.

Beispiel 4

(Herstellung einer erfindungsgemäß einzusetzenden Polyisocyanatkomponente A)

194 g Diisocyanat I und 20,8 g Neopentylglykol werden innerhalb 8 Stunden bis zu einem NCO-Gehalt von 31,0 % umgesetzt. Man gibt 42,0 g 1,6-Diisocyanatohexan zu und versetzt bei 50°C mit 2,5 ml Katalysatorlösung I. Nach einer Reaktionszeit von 3 Stunden bei 60°C wird nach Erreichen eines NCO-Gehalts von 18,9 % bis 110°C geheizt und 30 Minuten bei dieser Temperatur nachgerührt. Man gießt auf ein Blech und erhält nach dem Abkühlen der Schmelze ein klares Festharz mit einem NCO-Gehalt von 13,6 % und einen Schmelzbereich (bestimmt nach der Differential-Thermoanalyse) von 50 bis 60°C. Der Gehalt an monomerem Diisocyanat I liegt unterhalb 0,5 %, der Gehalt an monomerem 1,6-Diisocyanatohexan unterhalb 0,03 %. Die Gehalte an Urethangruppen und Isocyanuratgruppen betragen 9,2 % bzw. 17,8 %.

Beispiel 5 (Verwendung)

48 Gew.-Teile eines hydroxylgruppenhaltigen Polyesters, der aus 66,6 Gew.-Teilen Terephthalsäure, 38,2 Gew.-Teilen Neopentylglykol, 5,3 Gew.-Teilen 1,-6-Dihydroxyhexan und 4,5 Gew.-Teilen Trimethylolpropan hergestellt wurde und eine OH-Zahl von 50 und einen Schmelzbereich (bestimmt nach der Differenzial-Thermoanalyse) von 55 -60°C aufweist, werden mit 12 Gew.-Teilen des gemäß Beispiel 2 erhaltenen modifizierten Polyisocyanats und 40 Gew.-Teilen eines handelsüblichen Titandioxidpigments in einem Extruder bei ca. 120°C aufgeschmolzen und homogenisiert. Die Dosierung des Polyhydroxylpolyesters und des Polyisocyanats erfolgt hierbei im Verhältnis der Äquivalentgewichte. Nach dem Erstarren der Schmelze wird das Produkt gemahlen und mittels einer elektrostatischen Sprüheinrichtung auf Prüfbleche appliziert und innerhalb 15 Minuten/180°C ausgehärtet.

Bei einer Schichtdicke von ca. 55 µm werden folgende lacktechnische Eigenschaften gefunden:
Glanz: 88 %
(Gardner, 60° Reflexionswinkel)
Erichsentiefung: > 9,0 mm
(DIN 53 156)
Weißgrad: 80,5, nach 20 min/220°C: 69,0
(nach Berger/Elrephomat)
Gelierzeit: 161 sec/180°C
(DIN 55 990 Teil 8, Punkt 5.1)
Rieselfähigkeit: rieselfähig bis 50°C
(DIN 55 990 Teil 7, 2 Wochen bei 45 und 50°C)

Beispiel 6 (Verwendung)

48,3 Gew.-Teile des hydroxylgruppenhaltigen Polyesters aus Beispiel 5, 11,7 Gew.-Teile des gemäß Beispiel 3 erhaltenen modifizierten Polyisocyanats und 40 Gew.-Teile eines handelsüblichen Titandioxidpigments werden in einem Extruder bei 120°C homogenisiert, wobei das Äquivalentverhältnis des Polyhydroxylpolyesters zu dem Polyisocyanat sich wie 1:1 verhält. Nach dem Erstarren der Schmelze wird das gemahlene Produkt mittels einer elektrostatischen Strüheinrichtung auf Prüfbleche appliziert und innerhalb 15 Minuten/200°C ausgehärtet.

Bei einer Schichtdicke von ca. 55 µm werden folgende lacktechnische Eigenschaften gefunden:
Glanz: 90 %
Erichsentiefung: > 9,0 mm
Weißgrad: 79,7, nach 20 min/220°C: 70,3
Gelierzeit: 133 sec/180°C
Rieselfähigkeit: rieselfähig bis 50°C

Beispiel 7 (Verwendung)

48 Gew.-Teile des wie in Beispiel 5 verwendeten hydroxylgruppenhaltigen Polyesters, 12 Gew.-Teile des gemäß Beispiel 4 erhaltenen modifizierten Polyisocyanats und 40 Gew.-Teile eines handelsüblichen Titandioxidpigments werden in einem Extruder bei 120°C homogenisiert und nach dem Erstarren

der Schmelze zu einem Pulverlack gemahlen. Man appliziert mittels einer elektrostatischen Sprüheinrichtung auf Prüfbleche und härtet innerhalb 15 Minuten/180°C zu einer ca. 55 µm starken Schichtdicke aus.

Folgende lacktechnische Eigenschaften werden gefunden:

Glanz: 90 %
Erichsentiefung: > 9,0 mm
Weißgrad: 78,8, nach 20 min/220°C: 73,2
Gelierzeit: 129 sec/180°C
Rieselfähigkeit: rieselfähig bis 45°C

Beispiel 8

(Herstellung einererfindungsgemäß einzusetzenden Polyisocyanatkomponente A)

Zu 1830 g Diisocyanat II werden bei 120°C unter Rühren innerhalb ca. 2 h 134 g Trimethylolpropan als Schmelze zugetropft. Man läßt bei dieser Temperatur ausreagieren, bis ein NCO-Gehalt von 25,2% erreicht ist. Aus der klaren viskosen Lösung wird durch Dünnschichtdestillation bei 180°C/0,1 mbar unumgesetztes Diisocyanat II abgetrennt.

Man erhält ca. 800 g eines klaren Festharzes mit einem NCO-Gehalt von 12,5% und einem Schmelzbereich (bestimmt nach der Differential-Thermoanalyse) von 50 - 55°C. Der Gehalt an monomerem Diisocyanat II liegt unterhalb 0,5. Der Gehalt an Urethangruppen berechnet sich zu 22,6%.

Beispiel 9 (Verwendung)

45,2 Gew.-Teile des hydroxylgruppenhaltigen Polyesters aus Beispiel 5, 13,8 Ge.-Teile des gemäß Beispiel 8 erhaltenen modifizierten Polyisocyanats und 40 Gew.-Teile eines handelsüblichen Titandioxidpigments werden in einem Extruder bei 120°C homogenisiert, wobei das Äquivalentverhältnis des Polyhydroxylpolyesters zu dem Polyisocyanat sich wie 1:1 verhält. Das gemahlene Produkt wird mittels einer elektrostatischen Sprüheinrichtung auf Prüfbleche appliziert und härtet innerhalb 15 Minuten/200°C zu einer ca. 55 µm starken Schichtdicke aus.

## Patentansprüche

1. Pulverlack bestehend im wesentlichen aus einem Gemisch aus

A) einer pulverförmigen, unterhalb 40°C festen und oberhalb 150°C flüssigen Polyisocyanatkomponente,

B) einer pulverförmigen, unterhalb 40°C festen und oberhalb 150°C flüssigen organischen Polyhydroxylkomponente

und gegebenenfalls

C) aus der Pulverlack-Technologie bekannten Hilfs- und Zusatzmitteln,

wobei die Komponenten A) + B) in einem Äquivalentverhältnis von Isocyanatgruppen zu Hydroxylgruppen von 0,6:1 bis 1,2:1 entsprechenden Mengen vorliegen, dadurch gekennzeichnet, daß die Komponente A) im wesentlichen ein Polyisocyanat oder Polyisocyanat-Gemisch darstellt,

a) welches keine Blockierungsmittel für Isocyanatgruppen aufweist,

b) welches einen Gehalt an freien, an tertiäre, aliphatische oder cycloaliphatische Kohlenstoffatome gebundenen Isocyanatgruppen (berechnet als NCO) von 8 bis 24 Gew.-% bei einer (mittleren) NCO-Funktionalität von mindestens 2,1 aufweist,

c) welches einen Gehalt an Urethangruppen (berechnet als -NH-CO-O-) von 3 bis 30 Gew.-% aufweist

und

d) welches einen Gehalt an Isocyanuratgruppen (berechnet als $C_3N_3O_3$) von 0 bis 30 Gew.-% aufweist.

2. Verwendung des Pulverlacks gemäß Anspruch 1 zur Beschichtung beliebiger Hitze-resistenter Substrate nach den Methoden der Pulverlack-Technologie.

## Claims

1. A powder lacquer consisting essentially of a mixture of

A) a powder-form polyisocyanate component which is solid below 40°C and liquid above 150°C,

B) a powder-form organic polyhydroxyl component which is solid below 40°C and liquid above 150°C and, optionally,

C) auxiliaries and additives known from powder lacquer technology,

components A) and B) being present in quantities corresponding to an equivalent ratio of isocyanate groups to hydroxyl groups of from 0.6:1 to 1.2:1, characterized in that component A) is essentially a polyisocyanate or polyisocyanate mixture

a) which does not contain any blocking agents for isocyanate groups,

b) which has a content of free isocyanate groups (expressed as NCO) attached to tertiary aliphatic or cycloaliphatic carbon atoms of from 8 to 24% by weight for a (mean) NCO functionality of at least 2.1,

c) which has a content of urethane groups (expressed as -NH-CO-O-) of from 3 to 30% by weight and

d) which has a content of isocyanurate groups (expressed as $C_3N_3O_3$) of from 0 to 30% by weight.

2. The use of the powder lacquer claimed in Claim 1 for coating heat-resistant substrates of any kind by standard methods of powder lacquer technology.

## Revendications

1. Vernis en poudre composé en substance d'un mélange de

A) un composant polyisocyanate pulvérulent, solide en-dessous de 40°C et liquide au-dessus de 150°C,

B) un composant organique polyhydroxylé pulvérulent, solide en-dessous de 40°C et liquid au-dessus de 150°C et éventuellement

C) des adjuvants et additifs connus de la technologie des vernis en poudre,

dans lequel les composants A) + B) sont présents en quantités correspondant à un rapport, entre les équivalents des groupes isocyanate et des groupes hydroxyle, de 0,6:1 à 1,2:1, caractérisé en ce que le composant A) consiste en substance en un polyisocyanate ou un mélange de polyisocyanates,

a) qui ne comporte pas d'agent bloquant pour les groupes isocyanate,

b) qui présente un teneur en groupes isocyanate libres liés à des atomes de carbone aliphatiques ou cycloaliphatiques tertiaires (calculé comme NCO) de 8 à 24% en poids pour une fonctionnalité NCO (moyenne) d'au moins 2,1,

c) qui présente une teneur en groupes uréthane (calculée comme -NH–CO–O-) de 3 à 30% en poids, et

d) qui présente une teneur en groupes isocyanurate (calculée comme $C_3N_3O_3$) de 0 à 30% en poids.

2. Utilisation du vernis en poudre selon la revendication 1 pour le revêtement de substrats quelconques résistant à la chaleur, selon les méthodes de la technologie des vernis en poudre.